(19) Europäisches Patentamt
European Patent Office
Office européen des brevets

(11) **EP 4 425 612 A1**

(12) **EUROPEAN PATENT APPLICATION**
published in accordance with Art. 153(4) EPC

(43) Date of publication:
**04.09.2024 Bulletin 2024/36**

(21) Application number: **21962018.4**

(22) Date of filing: **01.11.2021**

(51) International Patent Classification (IPC):
**H01M 4/48** (2010.01)  **H01M 4/62** (2006.01)

(52) Cooperative Patent Classification (CPC):
Y02E 60/10

(86) International application number:
**PCT/CN2021/127966**

(87) International publication number:
**WO 2023/070668 (04.05.2023 Gazette 2023/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventor: **LI, Xin
Ningde, Fujian 352100 (CN)**

(74) Representative: **Icosa
83 avenue Denfert-Rochereau
75014 Paris (FR)**

(54) **NEGATIVE ELECTRODE ACTIVE MATERIAL, ELECTROCHEMICAL DEVICE, AND ELECTRONIC DEVICE**

(57) This application relates to a negative electrode active material, an electrochemical apparatus, and an electronic apparatus. The negative electrode active material includes carbon-silicon-oxygen particles and an aluminum oxide layer located on a surface of the carbon-silicon-oxygen particles, where the carbon-silicon-oxygen particles are represented by $SiC_xO_y$, $0<x<0.04$, and $0.8<y<1.2$. The negative electrode active material is used for the electrochemical apparatus and can significantly improve the cycling performance.

FIG. 1

EP 4 425 612 A1

**Description**

**TECHNICAL FIELD**

This application relates to the field of energy storage and specifically to a negative electrode active material, an electrochemical apparatus, and an electronic apparatus.

**BACKGROUND**

In recent years, silicon has been viewed as a negative electrode material most likely to be applied to lithium-ion batteries on a large scale because its reversible capacity of silicon is up to 4200 mAh/g. However, silicon undergoes about 400% volume swelling during charge and discharge. The ultra-high volume swelling destroys a solid electrolyte interface (SEI), and a new material surface exposed due to interface destruction will continuously consume an electrolyte, leading to repeated SEI formation. Although silicon-oxygen materials have a slightly lower capacity than pure silicon, silicon-oxygen materials can significantly reduce volume swelling to some extent. Reasonable design of a silicon-oxygen ratio and particle size of a silicon-oxygen material, optimization of battery preparation processes, and the like can make the volume of silicon-oxygen material swell only 120%, but this still cannot meet the current requirements for long cycle life of lithium-ion batteries.

**SUMMARY**

In order to solve the problems in the prior art, this application provides a negative electrode active material and an electrochemical apparatus containing the negative electrode active material. When the negative electrode active material is used for the electrochemical apparatus, the cycling performance of the electrochemical apparatus can be significantly improved.

According to a first aspect, a negative electrode active material provided in this application includes carbon-silicon-oxygen particles and an aluminum oxide layer located on a surface of the carbon-silicon-oxygen particles, where the carbon-silicon-oxygen particles are represented by $SiC_xO_y$, 0<x<0.04, and 0.8<y<1.2. Aluminum oxide ($Al_2O_3$) on the surface of the carbon-silicon-oxygen particles can react with HF generated in decomposition of an electrolyte, inhibiting generation of silicon-hydrogen bonds (Si-H) on the surface of the carbon-silicon-oxygen particles, thereby inhibiting agglomeration of the carbon-silicon-oxygen particles. This improves the stability at the interface of the carbon-silicon-oxygen material, thereby allowing for a better capacity retention rate and swelling rate of an electrochemical apparatus using the negative electrode active material.

According to some embodiments of this application, in $SiC_xO_y$, 0.01≤x≤0.035, and 0.85≤y≤1.0. As the value of x increases, in the negative electrode active material, a percentage of carbon increases, and a percentage of active silicon decreases. As a result, the gram capacity of the negative electrode active material decreases, and the electrochemical apparatus with the same capacity design has a decreased cycling capacity retention rate but an increased swelling rate. As the value of x decreases, in the negative electrode active material, a percentage of carbon decreases, and a percentage of active silicon increases. Although the gram capacity of the negative electrode active material increases, the structural stability thereof deteriorates, and the electrochemical apparatus with the same capacity design has a decreased cycling capacity retention rate but an increased swelling rate.

According to some embodiments of this application, thickness of the aluminum oxide layer is 0.5 nm to 10 nm. When the thickness of the aluminum oxide layer is small, a percentage of Al decreases, ionic conductivity at the interface is improved, and the gram capacity of the material slightly increases. However, a thinner aluminum oxide layer has weakened effect in resisting corrosion by HF, leading to decreased cycling capacity retention rate and increased swelling rate of the electrochemical apparatus. When the thickness of the aluminum oxide layer is large, a percentage of Al increases, ionic conductivity at the interface deteriorates, and the gram capacity of the material decreases. In addition, an excessively thick aluminum oxide layer leads to an increase in the amount of $H_2O$ produced in the reaction of $Al_2O_3$ and HF, causing the electrolyte to decompose faster to produce more HF. As a result, the interface cannot be effectively protected, thereby leading to decreased cycling capacity retention rate and increased swelling rate of the electrochemical apparatus.

According to some embodiments of this application, based on mass of the negative electrode active material, a percentage of element silicon is a%, where 45≤a≤70. When the percentage of silicon is too high, the swelling of the negative electrode active material is too severe, and the cycling performance of the material deteriorates. When the percentage of silicon is too low, the gram capacity of the negative electrode active material is low, and correspondingly, the energy density of the electrochemical apparatus is low. According to some embodiments of this application, based on mass of the negative electrode active material, a percentage of element carbon is b%, where 0.9≤b≤11. When the percentage of carbon is too low, silicon-carbon bonds (Si-C) become fewer, making the stability of the negative electrode active material worse, thereby leading to decreased cycling capacity retention rate and increased swelling rate of the electrochemical apparatus. Based on mass of the negative electrode active material, a percentage of element aluminum is c%, where $0.04 \leq c \leq 1.0$. When the percentage of aluminum is too high, the ionic conductivity of the interface deteriorates, leading to deteriorated cycling performance and swelling performance of the electrochemical apparatus. When the aluminum percentage is too low, the protective effect on the interface of the carbon-silicon-oxygen material weakens, also leading to deteriorated cycling performance and swelling performance of the electrochemical apparatus.

According to some embodiments of this application, based on mass of the negative electrode active material, a percentage a% of element silicon and a percentage c% of element aluminum satisfy $0.001 \leq c/a \leq 0.015$. According to some embodiments of this application, based on mass of the negative electrode active material, a percentage b% of element carbon and a percentage c% of element aluminum satisfy $0.008 \leq c/b \leq 0.30$.

According to some embodiments of this application, the negative electrode active material satisfies at least one of the following conditions (d) to (g): (d) $D_v50$ of the carbon-silicon-oxygen particles ranges from 2.5 $\mu$m to 10 $\mu$m; (e) particle size distribution of the carbon-silicon-oxygen particles satisfies $0.3 \leq D_n10/D_v50 \leq 0.6$; (f) in an X-ray diffraction pattern of the carbon-silicon-oxygen particles, a highest intensity value at $2\theta$ of 28.0° to 29.0° is I2, and a highest intensity value at $2\theta$ of 20.5° to 21.5° is I1, where $0 < I2/I1 < 1$; or (g) specific surface area of the carbon-silicon-oxygen particles is 1 $m^2/g$ to 50 $m^2/g$.

According to some embodiments of this application, powder conductivity of the negative electrode active material is 2.0 S/cm to 30 S/cm.

According to some embodiments of this application, the negative electrode active material further includes graphite. The addition of the graphite can increase the gram capacity of the negative electrode active material. In some embodiments, the graphite includes at least one of natural graphite, artificial graphite, or meso-carbon microbeads.

According to some embodiments of this application, a method for preparing the negative electrode active material includes: making a carbon-silicon-oxygen material and an aluminum source undergo a deposition reaction to obtain a reaction product; and roasting the reaction product.

According to some embodiments of this application, a roasting temperature is 300°C to 800°C. If the roasting temperature decreases, bond energy between aluminum-oxygen bonds (Al-O) weakens, and the stability of the aluminum oxide on the surface of the negative electrode active material deteriorates, causing the protective effect of the aluminum oxide on the interface to deteriorate, thereby leading to decreased cycling capacity retention rate and increased swelling rate of the electrochemical apparatus. If the roasting temperature increases, bond energy between silicon-oxygen bonds (Si-O) strengthens, and a crystallization phenomenon occurs, causing uneven stress distribution during cycling. This leads to formation of more new interfaces, thereby leading to decreased cycling capacity retention rate and increased swelling rate of the electrochemical apparatus.

According to some embodiments of this application, a roasting time is 1 h to 5 h. If the roasting time is too short, Al-O bond strength is low, Al-O bonding is insufficient, the stability of the aluminum oxide on the surface deteriorates, causing the protective effect of the aluminum oxide on the interface to deteriorate, thereby leading to decreased capacity retention rate and increased swelling rate of the electrochemical apparatus. If the roasting time is too long, silicate phases become more, bond strength of silicon-silicon bonds (Si-Si) decreases, and bond strength of Si-O bonds increases, causing the structural stability of the material to deteriorate, thereby leading to decreased capacity retention rate and increased swelling rate of the electrochemical apparatus.

According to a second aspect, this application provides an electrochemical apparatus including a negative electrode, where the negative electrode includes the negative electrode active material according to the first aspect. According to some embodiments of this application, sheet resistance of the negative electrode is 0.2 $\Omega$ to 1 $\Omega$.

According to a third aspect, this application provides an electronic apparatus including the electrochemical apparatus according to the second aspect of this application.

This application provides the negative electrode active material, and the aluminum oxide layer is present on the surface of the silicon-oxygen material doped with carbon in the negative electrode active material. The presence of the aluminum oxide layer protects the silicon material interface from corrosion by HF and the like, effectively improving the interface stability of the material, thereby improving the cycling performance of the electrochemical apparatus containing the active material.

**BRIEF DESCRIPTION OF DRAWINGS**

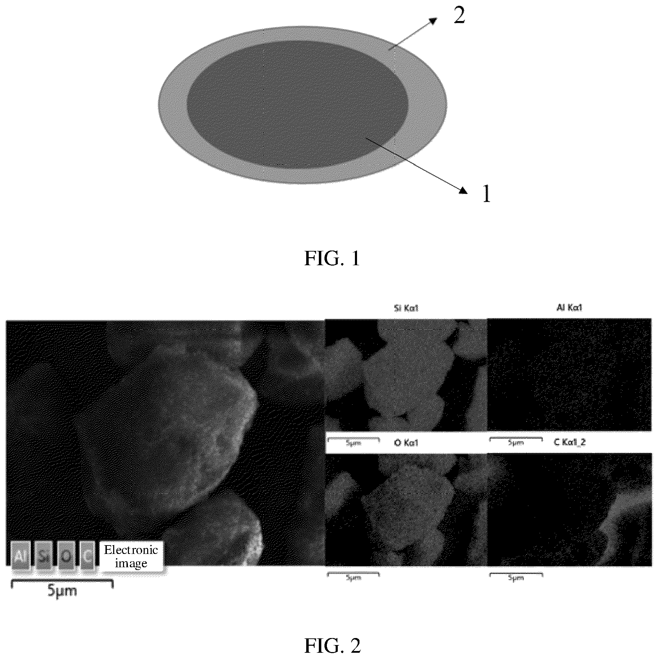

FIG. 1 is a schematic structural diagram of a negative electrode active material according to an embodiment of this application, where 1 represents $SiC_xO_y$, and 2 represents an aluminum oxide layer.
FIG. 2 is an EDS layered image of a negative electrode active material in Example 1 according to this application.

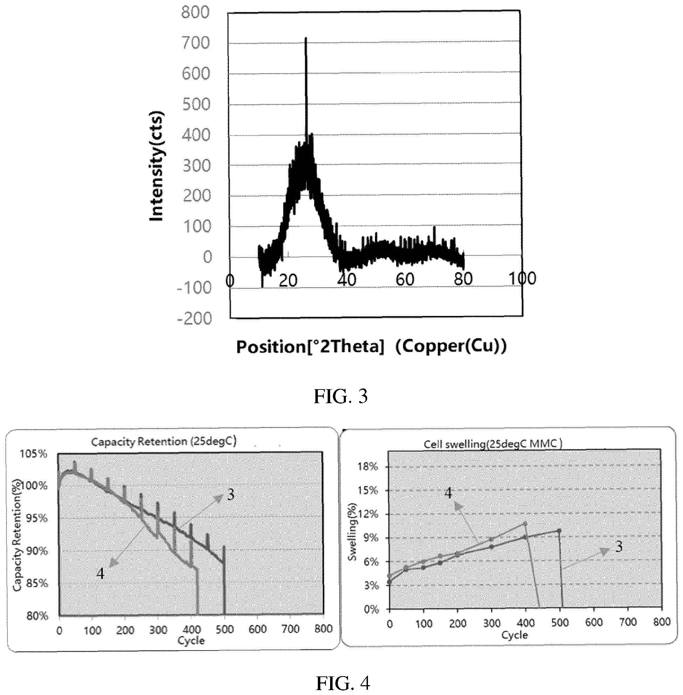

FIG. 3 is an XRD pattern of the negative electrode active material in Example 1 according to this application.

FIG. 4 is a comparison diagram of capacity retention rates and cycling swelling of lithium-ion batteries of Example 1 and Comparative Example 1, where 3 represents Example 1, and 4 represents Comparative Example 1.

**DESCRIPTION OF EMBODIMENTS**

To make the objectives, technical solutions, and advantages of this application clearer, the following clearly and completely describes the technical solutions in this application with reference to some embodiments. Apparently, the described embodiments are some but not all embodiments of this application. These embodiments described herein are illustrative in nature and used to provide a basic understanding of this application. Some embodiments of this application should not be construed as a limitation on this application.

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or individual single numerical value may itself be a lower limit or an upper limit which can be combined with any other point or individual numerical value or combined with another lower limit or upper limit to form a range not expressly recorded.

In the descriptions of this specification, "more than" or "less than" is inclusive of the present number unless otherwise specified.

Unless otherwise specified, the terms used in this application have well known meanings as commonly understood by persons skilled in the art. Unless otherwise specified, numerical values of parameters mentioned in this application may be measured by using various measurement methods commonly used in the art (for example, they may be tested by using the methods provided in the embodiments of this application).

A list of items connected by the terms "at least one of", "at least one piece of", "at least one kind of", or the like may mean any combination of the listed items. For example, if items A and B are listed, the phrase "at least one of A or B" means only A; only B; or A and B. In another example, if items A, B, and C are listed, the phrase "at least one of A, B, or C" means only A, only B, only C, A and B (excluding C), A and C (excluding B), B and C (excluding A), or all of A, B, and C. The item A may contain a single constituent or a plurality of constituents. The item B may contain a single constituent or a plurality of constituents. The item C may contain a single constituent or a plurality of constituents.

I. Negative electrode active material

According to a first aspect, a negative electrode active material provided in this application includes carbon-silicon-oxygen particles and an aluminum oxide layer located on a surface of the carbon-silicon-oxygen particles, where the carbon-silicon-oxygen particles are represented by $SiC_xO_y$, $0<x<0.04$, and $0.8<y<1.2$. Aluminum oxide on the surface of the carbon-silicon-oxygen particles can react with HF generated in decomposition of an electrolyte, inhibiting generation of silicon-hydrogen bonds (Si-H) on the surface of the carbon-silicon-oxygen particles, thereby inhibiting agglomeration of the carbon-silicon-oxygen particles. This improves the stability at the interface of the carbon-silicon-oxygen material, thereby allowing for a better capacity retention rate and swelling rate of an electrochemical apparatus using the negative electrode active material.

According to some embodiments of this application, in $SiC_xO_y$, x may be 0.005, 0.015, 0.017, 0.02, 0.023, 0.025, 0.027, 0.03, 0.033, or 0.037, or in a range defined by any two of these values. In some embodiments, $0.01 \leq x \leq 0.035$. According to some embodiments of this application, in $SiC_xO_y$, y may be 0.87, 0.90, 0.93, 0.95, 0.97, 1.05, 1.1, or 1.15, or in a range defined by any two of these values. In some embodiments, $0.85 \leq y \leq 1.0$. As the value of x increases, in the negative electrode active material, a percentage of carbon increases, and a percentage of active silicon decreases. As a result, the gram capacity of the negative electrode active material decreases, and the electrochemical apparatus with the same capacity design has a decreased cycling capacity retention rate but an increased swelling rate. As the value of x decreases, in the negative electrode active material, a percentage of carbon decreases, and a percentage of active silicon increases. Although the gram capacity of the negative electrode active material increases, the structural stability thereof deteriorates, and the electrochemical apparatus with the same capacity design has a decreased cycling capacity retention rate but an increased swelling rate.

According to some embodiments of this application, thickness of the aluminum oxide layer is 0.5 nm to 10 nm. In some embodiments, the thickness of the aluminum oxide layer is 1.5 nm, 2.5 nm, 3 nm, 4 nm, 5.5 nm, 6 nm, 7 nm, 8 nm, or 9 nm, or in a range defined by any two of these values. When the thickness of the aluminum oxide layer is small, a percentage of Al decreases, ionic conductivity at the interface is improved, and the gram capacity of the material slightly increases. However, a thinner aluminum oxide layer has weakened effect in resisting corrosion by HF, leading to decreased capacity retention rate and increased swelling rate of the electrochemical apparatus. When the thickness of the aluminum oxide layer is large, a percentage of Al increases, ionic conductivity at the interface deteriorates, and the gram capacity of the material decreases. In addition, an excessively thick aluminum oxide layer leads to an increase in the amount of $H_2O$ produced in the reaction of $Al_2O_3$ and HF, causing the electrolyte to decompose faster to produce more HF. As a result, the interface cannot be effectively protected, thereby leading to decreased capacity retention rate and increased swelling rate of the electrochemical apparatus.

According to some embodiments of this application, based on mass of the negative electrode active material, a percentage of element silicon is a%, where $45 \leq a \leq 70$. In some embodiments, a is 48, 52, 55, 57, 59, 62, 64, or 66, or in a range defined by any two of these values. In some embodiments, $50 \leq a \leq 65$. When the percentage of silicon is too high, the swelling of the negative electrode active material is too severe, and the cycling performance of the material deteriorates. When the percentage of silicon is too low, the gram capacity of the negative electrode active material is low, and correspondingly, the energy density of the electrochemical apparatus is low.

According to some embodiments of this application, based on mass of the negative electrode active material, a percentage of element carbon is b%, where $0.9 \leq b \leq 11$. In some embodiments, b is 0.98, 1.5, 2, 3, 4, 5, 6, 7, 8, 9, or 10.5, or in a range defined by any two of these values. In some embodiments, $1 \leq b \leq 10$. When the percentage of carbon is too low, silicon-carbon bonds (Si-C) become fewer, making the stability of the negative electrode active material worse, thereby deteriorating the cycling performance and swelling performance of the electrochemical apparatus.

According to some embodiments of this application, based on mass of the negative electrode active material, a percentage of element aluminum is c%, where $0.04 \leq c \leq 1.0$. In some embodiments, c is 0.07, 0.1, 0.2, 0.3, 0.4, 0.5, 0.6, 0.7, 0.8, or 0.9, or in a range defined by any two of these values. In some embodiments, $0.05 \leq c \leq 0.8$. When the percentage of aluminum is too high, the ionic conductivity of the interface deteriorates, leading to deteriorated cycling performance and swelling performance of the electrochemical apparatus. When the aluminum percentage is too low, the protective effect on the interface of the carbon-silicon-oxygen material weakens, also leading to deteriorated cycling performance and swelling performance of the electrochemical apparatus.

According to some embodiments of this application, based on mass of the negative electrode active material, a percentage a% of element silicon and a percentage c% of element aluminum satisfy $0.001 \leq c/a \leq 0.015$. In some embodiments, c/a is 0.002, 0.003, 0.004, 0.005, 0.006, 0.007, 0.008, 0.009, 0.01, 0.12, 0.13, or 0.145, or in a range defined by any two of these values. In some embodiments, $0.001 \leq c/a \leq 0.014$.

According to some embodiments of this application, based on mass of the negative electrode active material, a percentage b% of element carbon and a percentage c% of element aluminum satisfy $0.008 \leq c/b \leq 0.30$. In some embodiments, c/b is 0.01, 0.03, 0.05, 0.07, 0.09, 0.1, 0.13, 0.15, 0.17, 0.19, 0.2, 0.23, 0.25, 0.27, or 0.29, or in a range defined by any two of these values. In some embodiments, $0.01 \leq c/b \leq 0.29$.

According to some embodiments of this application, $D_v50$ of the carbon-silicon-oxygen particles ranges from 2.5 $\mu$m to 10 $\mu$m. In some embodiments, $D_v50$ of the carbon-silicon-oxygen particles is 2.5 $\mu$m, 3.0 $\mu$m, 4.0 $\mu$m, 4.5 $\mu$m, 5.5 $\mu$m, 6.0 $\mu$m, 7.0 $\mu$m, or 8.0 $\mu$m, or in a range defined by any two of these values. In this application, $D_v50$ is a corresponding particle size when a cumulative volume percentage of the particles reaches 50%.

According to some embodiments of this application, the particle size distribution of the carbon-silicon-oxygen particles satisfies $0.3 \leq D_n10/D_v50 \leq 0.6$. For example, $D_n10/D_v50$ is 0.35, 0.4, 0.45, 0.5, 0.55, or the like. In this application, D.10 is a corresponding particle size when a cumulative number percentage of the particles reaches 10%.

According to some embodiments of this application, in an X-ray diffraction pattern of the carbon-silicon-oxygen particles, a highest intensity value at $2\theta$ of 28.0° to 29.0° is I2, and a highest intensity value at $2\theta$ of 20.5° to 21.5° is I1, where $0 < I2/I1 \leq 1$. According to some embodiments of this application, specific surface area of the carbon-silicon-oxygen particles is 1 $m^2$/g to 50 $m^2$/g. In some embodiments, the specific surface area of the carbon-silicon-oxygen particles is 1 $m^2$/g, 10 $m^2$/g, 20 $m^2$/g, 30 $m^2$/g, 40 $m^2$/g, or 45 $m^2$/g, or in a range defined by any two of these values.

According to some embodiments of this application, powder conductivity of the negative electrode active material is 2.0 S/cm to 30 S/cm. In some embodiments, the powder conductivity of the negative electrode active material is 3.0 S/cm, 5.0 S/cm, 7.0 S/cm, 10 S/cm, 15 S/cm, 20 S/cm, or 25 S/cm, or in a range defined by any two of these values.

According to some embodiments of this application, the negative electrode active material further includes graphite. The addition of the graphite can increase the gram capacity of the negative electrode active material. In some embodiments, the graphite includes at least one of natural graphite, artificial graphite, or meso-carbon microbeads.

II. Method for preparing negative electrode active material

A method for preparing the negative electrode active material in this application includes: making a carbon-silicon-oxygen material and an aluminum source undergo a deposition reaction to obtain a reaction product; and roasting the reaction product.

According to some embodiments of this application, a roasting temperature is 300°C to 800°C. In some embodiments, the roasting temperature is 350°C, 430°C, 450°C, 470°C, 490°C, 510°C, 530°C, 550°C, 570°C, 590°C, 610°C, 630°C, 650°C, 670°C, 690°C, 710°C, 730°C, 750°C, or 770°C, or in a range defined by any two of these values. In some embodiments, a roasting temperature is 400°C to 700°C. If the roasting temperature decreases, bond energy between Al-O weakens, and the stability of $Al_2O_3$ on the surface of the negative electrode active material deteriorates, causing the protective effect of $Al_2O_3$ on the interface to deteriorate, thereby leading to decreased capacity retention rate and increased swelling rate of the electrochemical apparatus. If the roasting temperature increases, bond energy between Si-O strengthens, and a crystallization phenomenon occurs, causing uneven stress distribution during cycling. This leads to formation of more new interfaces, thereby leading to decreased capacity retention rate and increased swelling rate of the electrochemical apparatus.

According to some embodiments of this application, a roasting time is 1 h to 5 h. In some embodiments, the roasting time is 1.3 h, 1.5 h, 1.7 h, 1.9 h, 2.0 h, 2.3 h, 2.5 h, 2.7 h, 2.9 h, 3.1 h, 3.3 h, 3.5 h, 3.7 h, 4.0 h, 4.2 h, 4.5 h, or 4.7 h, or in a range defined by any two of these values. In some embodiments, a roasting time is 1.5 h to 4.5 h. If the roasting time is too short, Al-O bond strength is low, Al-O bonding is insufficient, the stability of $Al_2O_3$ on the surface deteriorates, causing the protective effect of the $Al_2O_3$ on the interface to deteriorate, thereby leading to decreased capacity retention rate and increased swelling rate of the electrochemical apparatus. If the roasting time is too long, silicate phases become more, bond strength of Si-Si bonds decreases, and bond strength of Si-O bonds increases, causing the structural stability of the material to deteriorate, thereby leading to decreased capacity retention rate and increased swelling rate of the electrochemical apparatus.

According to some embodiments of this application, the deposition reaction is a well-known chemical deposition method in the art, for example, atomic layer deposition (ALD) or chemical liquid phase deposition. In an ALD process, chemical reactants (such as trimethylaluminum and water vapor) are introduced into a reaction chamber in a gaseous state and enter a reactor in a pulse mode; and the reactants flow under the action of a sweeping gas or are dispersed from each other through pumping. Each reactant pulse reacts chemically with the surface of the particles, so that a single layer is precisely grown in ALD through this self-limiting process, with uniform coating.

According to some embodiments of this application, an aluminum source includes at least one of trimethylaluminum, triethylaluminum, or isobutylaluminum.

According to some embodiments of this application, the method for preparing the carbon-silicon-oxygen material includes: heating a raw material generating SiO gas; and feeding in a carbon source, for example, acetylene, at 600°C to 1100°C.

III. Electrochemical apparatus

An electrochemical apparatus provided in this application includes a negative electrode, where the negative electrode includes the negative electrode active material according to the first aspect. According to some embodiments of this application, sheet resistance of the negative electrode is 0.2 S2 to 1 $\Omega$.

According to some embodiments of this application, the negative electrode includes a negative electrode current collector and a negative electrode active material layer provided on a surface of the negative electrode current collector, where the negative electrode active material layer includes the negative electrode active material according to the first aspect. In some embodiments, the negative electrode active material layer further includes a binder, and the binder may include various binder polymers. In some embodiments, the binder includes at least one of polyvinylidene fluoride, a vinylidene fluoride-hexafluoropropylene copolymer, polyamide, polyacrylonitrile, polypropylene, polyacrylic acid, polyacrylate, sodium carboxymethylcellulose, polyvinylpyrrolidone, polyvinyl ether, polymethyl methacrylate, polytetrafluoroethylene, polyhexafluoropropylene, or styrene-butadiene rubber. In some embodiments, the negative electrode active material layer further includes a conductive material to improve electrode conductivity. Any conductive material causing no chemical change can be used as the conductive material. In some embodiments, the conductive material includes at least one of conductive carbon black, acetylene black, carbon nanotubes, Ketjen black, conductive graphite, or graphene.

According to some embodiments of this application, the negative electrode current collector may be copper foil, nickel foil, stainless steel foil, titanium foil, nickel foam, copper foam, a polymer substrate coated with conductive metal, or a combination thereof.

According to some embodiments of this application, the electrochemical apparatus further includes a positive electrode, and the positive electrode includes a current collector and a positive electrode active material layer located on the current collector.

According to some embodiments of this application, the positive electrode active material includes but is not limited to lithium cobalt oxide ($LiCoO_2$), lithium-nickel-cobalt-manganese (NCM) ternary material, lithium iron phosphate ($LiFePO_4$), or lithium manganate ($LiMn_2O_4$).

According to some embodiments of this application, the positive electrode active material layer further includes a conductive agent and a binder. In some embodiments, the binder includes but is not limited to polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, or nylon. In some embodiments, the conductive agent includes but is not limited to a carbon-based material, a metal-based material, a conductive polymer, or a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer is a polyphenylene derivative.

According to some embodiments of this application, the positive electrode current collector may be a metal foil or a composite current collector. For example, an aluminum foil may be used. The composite current collector may be formed by forming a metal material (copper, copper alloy, nickel, nickel alloy, titanium, titanium alloy, silver, silver alloy, or the like) on a polymer matrix.

The positive electrode provided in this application may be prepared by using a common method in the art. Usually, a positive electrode material, an optional conductive agent (for example, a carbon material such as carbon black, and metal particles), a binder (for example, SBR), an optional additive (for example, a PTC thermistor material), and other materials are mixed and dispersed in a solvent (for example, deionized water), the resulting mixture is stirred to uniformity to form a slurry, and then the slurry is uniformly applied on a positive electrode current collector, followed by drying, to obtain a positive electrode including a positive electrode membrane.

According to some embodiments of this application, the electrochemical apparatus further includes a liquid electrolyte or a solid-state electrolyte.

According to some embodiments of this application, the liquid electrolyte that can be used in some embodiments of this application may be a liquid electrolyte known in the prior art.

In some embodiments, the liquid electrolyte includes an organic solvent, a lithium salt, and an additive. The organic solvent of the liquid electrolyte according to this application may be any organic solvent known in the prior art which can be used as a solvent of the liquid electrolyte. An electrolytic salt used in the liquid electrolyte according to this application is not limited, and may be any electrolytic salt known in the prior art. The additive of the liquid electrolyte according to this application may be any additive known in the prior art which can be used as an additive of the liquid electrolyte. In some embodiments, the organic solvent includes but is not limited to ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent includes an ether solvent, for example, at least one of 1,3-dioxolane (DOL) or dimethoxyethane (DME). In some embodiments, the lithium salt includes at least one of an organic lithium salt or an inorganic lithium salt. In some embodiments, the lithium salt includes but is not limited to lithium hexafluorophosphate ($LiPF_6$), lithium tetrafluoroborate ($LiBF_4$), lithium difluorophosphate ($LiPO_2F_2$), lithium bistrifluoromethanesulfonimide $LiN(CF_3SO_2)_2$(LiTFSI), lithium bis(fluorosulfonyl)imide $Li(N(SO_2F)_2)$(LiFSI), lithium bis(oxalate) borate $LiB(C_2O_4)_2$(LiBOB), or lithium difluoro(oxalato)borate $LiBF_2(C_2O_4)$(LiDFOB).

According to some embodiments of this application, the solid-state electrolyte includes at least one of $Li_{2+x}Al_{2+x}Si_{1-x}S_6$ ($0 \leq x < 1$), $Li_3YCl_6$, $Lb_3YBr_6$, $Li_3OCl$, LiPON, $Li_{0.3}La_{0.5}TiO_3$, $Li_{1+x}Al_xTi_{2-x}(PO_4)_3$, $Li_7La_3Zr_2O_{12}$, $Li_{10}GeP_2S_{12}$ (LGPS), $Li_{9.54}Si_{1.74}P_{1.44}S_{11.7}Cl_{0.3}$, $Li_{3.25}Ge_{0.25}P_{0.75}S_4$, $Li_{11}AlP_2S_{12}$, or $Li_7P_3S_{11}$.

According to some embodiments of this application, in the electrochemical apparatus, a separator is provided between the positive electrode and the negative electrode to prevent short circuits. A material and shape of the separator used in some embodiments of this application is not specifically limited, and any technology disclosed in the prior art may be used for the separator. In some embodiments, the separator includes a polymer or an inorganic substance formed by a material stable to the electrolyte of this application. For example, the separator may include a substrate layer and a surface treatment layer. The substrate layer is non-woven fabric, film, or composite film of a porous structure. The substrate layer is made of at least one of polyethylene, polypropylene, polyethylene terephthalate, or polyimide. Specifically, a polypropylene porous film, a polyethylene porous film, polypropylene non-woven fabric, polyethylene non-woven fabric, or a polypropylene-polyethylene-polypropylene porous composite film may be selected. The surface treatment layer is provided on at least one surface of the substrate layer, and the surface treatment layer may be a polymer layer or an inorganic layer, or may be a layer formed by a mixed polymer and an inorganic substance. The inorganic substance layer includes an inorganic particle and a binder. The inorganic particle includes at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder includes at least one of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, or polyhexafluoropropylene. The polymer layer contains a polymer, and a material of the polymer includes at least one of polyamide, polyacrylonitrile, acrylate polymer, polyacrylic acid, polyacrylate, polyvinylpyrrolidone, polyvinyl ether, polyvinylidene fluoride, or poly (vinylidene fluoride-hexafluoropropylene).

According to some embodiments of this application, the electrochemical apparatus of this application includes but is not limited to all types of primary batteries, secondary batteries, fuel batteries, solar batteries, or capacitors. In some embodiments, the electrochemical apparatus is a lithium secondary battery. In some embodiments, the lithium secondary battery includes but is not limited to a lithium metal secondary battery, a lithium-ion secondary battery, a lithium polymer secondary battery or a lithium-ion polymer secondary battery.

IV. Electronic apparatus

The electronic apparatus in this application may be any apparatus using the electrochemical apparatus according to the third aspect of this application.

In some embodiments, the electronic apparatus includes but is not limited to a notebook computer, a pen-input computer, a mobile computer, an e-book player, a portable phone, a portable fax machine, a portable copier, a portable printer, a head-mounted stereo headset, a video recorder, a liquid crystal display television, a portable cleaner, a portable CD player, a mini disc, a transceiver, an electronic notebook, a calculator, a memory card, a portable recorder, a radio, a backup power supply, a motor, an automobile, a motorcycle, a motor bicycle, a bicycle, a lighting apparatus, a toy, a game machine, a clock, an electric tool, a flashlight, a camera, a large household storage battery, or a lithium-ion capacitor.

Examples and comparative examples

I. Preparation of $SiC_xO_y@Al_2O_3$ material

Step 1. A $SiC_xO_y$ material was placed in a treatment chamber of a fluidized bed system, and the treatment chamber was suctioned to make the pressure fall within a range of 0.3 mbar to 0.5 mbar.
Step 2. Deionized water was pulsed for 0.1s to 0.5s, for example, 0.3s, with adsorption reaction allowed for 30s to 90s, for example, 60s, and then an inert gas was used to blow away excess water.
Step 3. Trimethylaluminum was pulsed for 3s to 10s, for example, 5s, with adsorption reaction allowed for 30s to 90s, for example, 60s, and an inert gas was used to blow away excess trimethylaluminum.
Step 4. Deionized water was pulsed for 0.1s to 0.5s, for example, 0.3s, with adsorption reaction allowed for 30s to 90s, for example, 60s, and then an inert gas was used to blow away excess water.
Step 5. Steps 2 to 4 were repeated until a nano-coating layer with a certain thickness was formed on the surface of the $SiC_xO_y$ material.
Step 6. Powder obtained in step 5 was roasted at a specified temperature in an Ar atmosphere for a specified time to obtain a $SiC_xO_y@Al_2O_3$ material.

The preparation of the $SiC_xO_y$ material included the following steps:
A raw material generating SiO gas was heated, and acetylene was fed in at 600°C to 1100°C to obtain a $SiC_xO_y$ material. The values of x and y were adjusted by adjusting the amount of the raw material generating SiO gas and the acetylene.

II. Preparation of lithium-ion battery

The $SiC_xO_y@Al_2O_3$ material and graphite were mixed at a specified ratio to obtain mixed powder with a gram capacity of 850 mAh/g. The mixed powder, a conductive agent acetylene black, and PAA at a mass ratio of 95:1.2:3.8 were fully stirred and mixed to uniformity in solvent system of deionized water, and the resulting mixture was applied on a Cu foil, followed by drying and cold pressing to obtain a negative electrode plate.
A positive electrode active material lithium cobalt oxide $LiCoO_2$, a conductive agent carbon black Supper-P, and a binder polyvinylidene fluoride (PVDF for short, where a mass percentage of polyvinylidene fluoride in the binder was 10%) were uniformly dispersed in a solvent N-methylpyrrolidone (NMP for short) to obtain a positive electrode slurry. A solid content in the positive electrode slurry was 75%, and the solid components included 96% lithium cobalt oxide, 2% PVDF, and 2% conductive carbon black Super-P. The positive electrode slurry was uniformly applied on a positive electrode current collector aluminum foil, followed by drying and cold pressing, to obtain a positive electrode plate.
In a dry argon environment, $LiPF_6$ was added to a solvent obtained by mixing propylene carbonate (PC), ethylene carbonate (EC), and diethyl carbonate (DEC) (at a weight ratio of about 1:1:1), and the former substances were mixed to uniformity, with the concentration of $LiPF_6$ being about 1.15 mol/L. About 7.5% fluorinated ethylene carbonate (FEC) was added then, and these substances were mixed uniform to obtain an electrolyte.
A PE porous polymer film was used as a separator. The positive electrode plate, the separator, and the negative electrode plate were stacked in order, so that the separator was placed between positive and negative electrodes for isolation, and winding was performed to obtain an electrode assembly. The electrode assembly was placed in an outer package, the prepared electrolyte was injected, and sealing was performed, followed by processes such as formation, degassing, and trimming, to obtain a lithium-ion battery.

Example 1

Step 1. A $SiC_xO_y$ material was placed in a treatment chamber of a fluidized bed system, and the treatment chamber was suctioned to make the pressure fall within a range of 0.3 mbar to 0.5 mbar.

Step 2. Deionized water was pulsed for 0.3s, with adsorption reaction allowed for 60s, and then an inert gas was used to blow away excess water.

Step 3. Trimethylaluminum was pulsed for 5s, with adsorption reaction allowed for 60s, and an inert gas was used to blow away excess trimethylaluminum.

Step 4. Deionized water was pulsed for 0.3s, with adsorption reaction allowed for 60s, and then an inert gas was used to blow away excess water.

Step 5. Steps 2 to 4 were repeated until a 1 nm nano-coating layer was formed on the surface of the $SiC_xO_y$ material.

Step 6. Powder obtained in step 5 was roasted at 600°C in an Ar atmosphere for 3 h to obtain a $SiC_xO_y@Al_2O_3$ material.

Step 7. A lithium-ion battery was prepared in a same method as the description in the preparation process II.

In $SiC_xO_y@Al_2O_3$, x was 0.015, y was 0.95, and the $Al_2O_3$ layer on the surface was 1 nm thick. In the negative electrode active material $SiC_xO_y @ Al_2O_3$, a percentage of element Si was 60%, a percentage of carbon was 3.3%, a percentage of element Al was 0.086%, a ratio of element Al to element Si was 0.0014, and a ratio of element Al to element C was 0.026.

$D_v50$ of $SiC_xO_y$ all was 5.7 $\mu$m, the ratio $D_n10/D_v50$ was 0.49, I2/I1 was 0.78, and BET was 1.78 $m^2$/g.

The gram capacity of the powder of the $SiC_xO_y@Al_2O_3$ material was 1505 mAh/g, the capacity retention rate of the lithium-ion battery after 400 cycles was 92.5%, and the swelling rate thereof was 9%.

Example 2 to Example 5

For the preparation of $SiC_xO_y@Al_2O_3$ material and the manufacturing process of lithium-ion battery, refer to Example 1, with the difference lying in that in Examples 2 to 5, the thicknesses of the $Al_2O_3$ layers formed in step 5 were different. Refer to Table 1 for details.

Example 6 to Example 10

For the preparation of $SiC_xO_y@Al_2O_3$ material and the manufacturing process of lithium-ion battery, refer to Example 1, with the difference lying in that in Examples 6 to 9, the roasting temperatures in the Ar atmosphere in step 6 were different. Refer to Table 2 for details. In Example 10, the roasting time in the Ar atmosphere in step 6 was different. Refer to Table 2 for details.

Example 11 and Example 12

For the preparation of $SiC_xO_y@Al_2O_3$ material and the manufacturing process of lithium-ion battery, refer to Example 1, with the difference lying in that in Examples 11 and 12, $SiC_xO_y$ used was different. Refer to Table 3 for details.

Comparative Example 1

Step 1. The $SiC_xO_y$ material was roasted at 600°C for 3 h in an Ar atmosphere to obtain a $SiC_xO_y$ material treated with high temperature, where in $SiC_xO_y$, x was 0.002, and y was 0.98.

Step 2. A lithium-ion battery was prepared in a same method as the description in the preparation process II.

Step 3. The $SiC_xO_y$ material obtained did not contain element Al, and the gram capacity of the powder was 1510 mAh/g. The capacity retention rate of the lithium-ion battery after 400 cycles was 87%, and the swelling rate thereof was 11%.

Test method

SEM test

(1) Preparation of negative electrode ion polishing (using CP, Cross Section Polisher) sample: Negative electrode active material powder was fixed on a sample stage, and then treated with argon ion polishing (parameters: 8 KV acceleration voltage, and 4 h for each sample) to obtain a negative electrode active material CP sample.

(2) After the negative electrode active material CP sample was prepared, a scanning electron microscope (XL-30 field emission scanning electron microscope from Philips) was used to take SEM images of the negative electrode active material CP sample under conditions of 10 kV and 10 mA, and the thickness of the $Al_2O_3$ layer was measured by drawing a line.

Carbon percentage test: The sample was heated and combusted at a high temperature in a high-frequency furnace under oxygen-rich conditions to oxidize carbon and sulfur into carbon dioxide and sulfur dioxide, respectively. The gas entered a corresponding absorption tank after treatment to absorb corresponding infrared radiation, and then a corresponding signal was generated by a detector. The signal was sampled by using a computer and converted into values in direct proportional to concentrations of carbon dioxide and sulfur dioxide after linear correction; values in an entire analysis procedure were added; after the analysis, the sum was divided by mass and then multiplied by a correction coefficient on the computer; and a blank was deducted to obtain the percentages of carbon and sulfur contained in the sample. The sample was tested using a high-frequency infrared carbon-sulfur analyzer (HCS-140 from Shanghai Dekai).

Test for percentage of silicon and percentage of aluminum: A specified amount of the sample was weighed and added to a specified amount of concentrated nitric acid for microwave digestion to obtain a solution, and the obtained solution and filter residue washed several times were diluted to a specified volume. Plasma intensity of the elements was tested through ICP-OES. The percentages of the elements in the solution were calculated based on standard curves of the measured elements, so as to calculate the amounts of the elements contained in the material.

Powder conductivity: A resistivity tester (ST-2255A from Suzhou Jingge Electronics) was used. 5 g of the powder sample was taken and pressed at a constant pressure of 5000 kg$\pm$2 kg for 15s to 25s with an electronic press machine. The sample was placed between electrodes of the tester, with the sample height being h (cm), the voltage across two ends being U, the current being I, and the resistance being R (KS2). The area of the powder after pressing was 3.14 cm$^2$. The electronic conductivity of the powder was calculated according to the formula $\delta=h/(3.14\times R)/1000$, measured in S/cm.

Specific surface area test: At a constant low temperature, after amounts of gas adsorbed by the surface of a solid under different relative pressures were tested, an adsorption amount of a monomolecular layer of the sample was found based on the Brunauer-Emmett-Teller adsorption theory and its equation (BET equation), to calculate a specific surface area of the solid.

Particle size test: About 0.02 g of a powder sample was added into a 50 mL clean beaker, about 20 mL of deionized water was added into the breaker, with a few drops of surfactant (1%) added to make the powder fully dispersed in the water, the powder was subjected to ultrasound for 5 min in a 120 W ultrasonic cleaning machine, and a particle size distribution was tested with a MasterSizer 2000.

Test for gram capacity of negative electrode active material: In a dry argon environment, $LiPF_6$ was added to a solvent obtained by mixing propylene carbonate (PC), ethylene carbonate (EC), and diethyl carbonate (DEC) (at a weight ratio of about 1:1:1), and the former substances were mixed to uniformity, with the percentage of $LiPF_6$ being about 12%. About 7.5% fluorinated ethylene carbonate (FEC) was added then, and these substances were mixed uniform to obtain an electrolyte.

The negative electrode active material, conductive carbon black, and a binder PAA (modified polyacrylic acid, PAA) were added into deionized water at a weight ratio of about 80:10:10, and the resulting mixture was stirred to obtain a slurry. A 100 $\mu$m thick coating was made with a scraper, dried in a vacuum drying oven for 12 hours at 85°C, and then cut into circular plates with a diameter of 1 cm in a dry environment by using a punching machine. In a glove box, a button cell was assembled with a lithium metal plate as a counter electrode, a Ceglard composite membrane as a separator, and electrolyte added. LAND (LAND) series battery test system was used to conduct a charge and discharge test on the battery.

Specifically, the assembled button cell was taken and it was ensured that an open circuit voltage (OCV) was normal. Each group contained at least four parallel samples. The voltage window of the button cell was set at 0 V to 2.5 V. At 25°C, the button cell was left standing for 1 h, then discharged at a small current in three stages: 0.050/50$\mu$A/20$\mu$A, to form an SEI (solid electrolyte interface) film, and a lithiation capacity was recorded. Then, the cell was charged to 2.5 V at a current of 0.1C, and a delithiation capacity was recorded. This delithiation capacity was the gram capacity of the negative electrode active material.

Cycling test: At 25°C, the battery was charged at a constant current of 0.5C to 4.45 V, then charged at a constant voltage to 0.025C, left standing for 5 min, and then discharged at 0.5C to 3.0 V. A capacity obtained in this cycle was the initial capacity. Then, a 0.5C charge and 0.5C discharge cycling test was performed. A ratio of the capacity of each cycle to the initial capacity was calculated to obtain a capacity degradation curve. Capacity retention rate of after n cycles=discharge capacity after n cycles/initial capacity×100%.

Test for swelling rate of fully charged lithium-ion battery: At 25°C, the battery was charged at a constant current of 0.5C to 4.45 V, then charged at a constant voltage to 0.025C, left standing for 5 min, and then discharged at 0.5C to 3.0 V. A spiral micrometer was used to measure the thickness of the lithium-ion battery half charged, where the thickness was denoted as $h_0$. After 400 cycles, the lithium-ion battery was in a fully charged state, and then the thickness of the lithium-ion battery at that time was measured with the spiral micrometer, where the thickness was denoted as h. The swelling rate of the lithium-ion battery was equal to $\frac{h-h_0}{h_0} \times 100\%$ .

Test result

Table 1 shows the influence of the thickness of the aluminum oxide layer on the performance of the negative electrode active material and the lithium-ion battery containing the negative electrode active material.

The roasting temperature during preparation of the $SiC_xO_y$ material in Comparative Example 1 and the $SiC_xO_y@Al_2O_3$ material in Examples 1 to 5 was 600°C, and the roasting time was 3 h.

In $SiC_xO_y$ in Comparative Example 1 and $SiC_xO_y@Al_2O_3$ in Examples 1 to 5, x was 0.015 and y was 0.95. $D_v50$ of $SiC_xO_y$ all was 5.7 μm, the ratio $D_n10/D_v50$ was 0.49, and I2/I1 was 0.78.

The BETs of $SiC_xO_y$ in Comparative Example 1 and Examples 1 to 5 were 1.78 $m^2/g$, 1.78 $m^2/g$, 1.46 $m^2/g$, 1.98 $m^2/g$, 2.02 $m^2/g$, and 2.58 $m^2/g$, respectively.

**Table 1**

| Example and comparative example | SiCₓOᵧ@Al₂O₃ material | | | | | | | Lithium-ion battery | |
|---|---|---|---|---|---|---|---|---|---|
| | Thickness of aluminum oxide layer (nm) | Mass percentage of element silicon (%) | Mass percentage of element carbon (%) | Mass percentage of element aluminum (%) | Percentage ratio of aluminum/silicon | Percentage ratio of aluminum/carbon | Gram capacity (mAh/g) | Capacity retention rate after 400 cycles (%) | Swelling rate after 400 cycles (%) |
| Example 1 | 1 | 60.00 | 3.30 | 0.086 | 0.0014 | 0.0261 | 1505 | 92.5 | 9 |
| Example 2 | 0.5 | 60.10 | 3.35 | 0.043 | 0.0007 | 0.0128 | 1530 | 90.1 | 10.2 |
| Example 3 | 2 | 59.82 | 3.20 | 0.172 | 0.0029 | 0.0538 | 1492 | 91.2 | 9.3 |
| Example 4 | 5 | 59.00 | 3.10 | 0.43 | 0.0073 | 0.1387 | 1382 | 90.1 | 9.5 |
| Example 5 | 10 | 58 | 2.90 | 0.86 | 0.0149 | 0.2966 | 1204 | 89.1 | 10.5 |
| Comparative Example 1 | - | 60.00 | 3.30 | 0 | 0 | 0 | 1510 | 87 | 11 |

It can be learned from the data in table 1 that as the thickness of the $Al_2O_3$ layer decreases, the percentage of Al decreases, the ionic conductivity of the interface is improved, and the gram capacity of the $SiC_xO_y@Al_2O_3$ material slightly increases. However, a thinner $Al_2O_3$ layer has weakened effect in resisting corrosion by HF, leading to decreased capacity retention rate and increased swelling rate of the lithium-ion battery. As the thickness of the $Al_2O_3$ layer increases, the percentage of Al increases, the ionic conductivity of the interface deteriorates, and the gram capacity of the $SiC_xO_y@Al_2O_3$ material decreases. In addition, an excessively thick $Al_2O_3$ layer leads to an increase in the amount of $H_2O$ produced in the reaction of $Al_2O_3$ and HF, causing the electrolyte to decompose faster to produce more HF. As a result, the interface cannot be effectively protected, thereby leading to decreased capacity retention rate and increased swelling rate of the lithium-ion battery.

Table 2 shows the influence of the roasting temperature and time in step 6 of the method for preparing negative electrode active material on the performance of the negative electrode active material obtained and the lithium-ion battery containing the negative electrode active material.

The thickness of the aluminum oxide layer of the $SiC_xO_y@Al_2O_3$ material in Examples 6 to 10 was 1 nm, x was 0.015, and y was 0.95. $D_v50$ of $SiC_xO_y$ all was 5.7 $\mu$m, the ratio $D_n10/D_v50$ was 0.49, I2/I1 was 0.78, and BET was 1.78 $m^2/g$.

**Table 2**

| Example | Roasting temperature | Roasting time | $SiC_xO_y@Al_2O_3$ material | | | | | | Lithium-ion battery | | |
|---|---|---|---|---|---|---|---|---|---|---|---|
| | | | Mass percentage of element silicon (%) | Mass percentage of element carbon (%) | Mass percentage of element aluminum (%) | Percentage ratio of aluminum/silicon | Percentage ratio of aluminum/carbon | Gram capacity (mAh/g) | Capacity retention rate after 400 cycles (%) | Swelling rate after 400 cycles (%) | |
| Example 1 | 600 | 3 | 60.00 | 3.30 | 0.086 | 0.0014 | 0.0261 | 1505 | 92.5 | 9 | |
| Example 6 | 400 | 3 | 60.06 | 3.25 | 0.085 | 0.0014 | 0.0262 | 1501 | 91.6 | 9.2 | |
| Example 7 | 500 | 3 | 60.52 | 3.28 | 0.088 | 0.0015 | 0.0268 | 1502 | 91.8 | 9.1 | |
| Example 8 | 700 | 3 | 59.82 | 3.17 | 0.082 | 0.0014 | 0.0259 | 1482 | 90.7 | 9.2 | |
| Example 9 | 800 | 3 | 58.75 | 3.08 | 0.085 | 0.0014 | 0.0276 | 1381 | 90.1 | 9.4 | |
| Example 10 | 600 | 1 | 60.02 | 3.31 | 0.079 | 0.0013 | 0.0239 | 1512 | 90.4 | 10.6 | |

It can be learned from the data in table 2 that if the roasting temperature decreases, bond energy between Al-O weakens, and the stability of $Al_2O_3$ on the surface deteriorates, causing the protective effect of $Al_2O_3$ on the interface to deteriorate, thereby leading to decreased capacity retention rate and increased swelling rate of the lithium-ion battery. If the roasting temperature increases, bond energy between Si-O strengthens, and a crystallization phenomenon occurs, causing uneven stress distribution during cycling. This leads to formation of more new interfaces, thereby leading to decreased capacity retention rate and increased swelling rate of the lithium-ion battery.

If the roasting time is too short, Al-O bond strength is low, bonding is insufficient, the stability of $Al_2O_3$ on the surface deteriorates, causing the protective effect of the $Al_2O_3$ on the interface to deteriorate, thereby leading to decreased capacity retention rate and increased swelling rate of the lithium-ion battery. If the roasting time is too long, silicate phases become more, bond strength of Si-Si bonds decreases, and bond strength of Si-O bonds increases, causing the structural stability of the $SiC_xO_y@Al_2O_3$ material to deteriorate, thereby leading to decreased capacity retention rate and increased swelling rate of the lithium-ion battery.

Table 3 shows the influence of the values of x and y in the negative electrode active material on the performance of the negative electrode active material and the lithium-ion battery containing the negative electrode active material.

The roasting temperature during preparation of the $SiC_xO_y@Al_2O_3$ material in Examples 11 and 12 was 600°C, and the roasting time was 3 h.

The thickness of the aluminum oxide layer of the $SiC_xO_y@Al_2O_3$ material in Examples 11 and 12 was 1 nm. $D_v50$ of $SiC_xO_y$ all was 5.7 $\mu$m, the ratio $D_n10/D_v50$ was 0.49, I2/I1 was 0.78, and BET was 1.78 $m^2/g$.

## Table 3

| Example | SiC$_x$O$_y$@Al$_2$O$_3$ material | | | | | | | | Lithium-ion battery | |
| | x | y | Mass percentage of element silicon (%) | Mass percentage of element carbon (%) | Mass percentage of element aluminum (%) | Percentage ratio of aluminum/silicon | Percentage ratio of aluminum/carbon | Gram capacity (mAh/g) | Capacity retention rate after 400 cycles (%) | Swelling rate after 400 cycles (%) |
|---|---|---|---|---|---|---|---|---|---|---|
| Example 1 | 0.015 | 0.95 | 60.00 | 3.30 | 0.086 | 0.0014 | 0.0261 | 1505 | 92.5 | 9 |
| Example 11 | 0.04 | 0.82 | 48.6 | 10.20 | 0.084 | 0.0017 | 0.0082 | 1210 | 91.2 | 10.4 |
| Example 12 | 0.002 | 0.98 | 65.80 | 0.98 | 0.088 | 0.0013 | 0.0898 | 1621 | 91.5 | 10.1 |

It can be learned from the data in table 3 that as the value of x increases, the percentage of carbon in the SiC$_x$O$_y$@Al$_2$O$_3$ material increases, and the percentage of active silicon thereof decreases, causing the gram capacity of the SiC$_x$O$_y$@Al$_2$O$_3$ material to decrease, and the lithium-ion battery with the same capacity design to have decreased cycling capacity retention rate and increased swelling rate. As the value of x decreases, the percentage of carbon in the SiC$_x$O$_y$@Al$_2$O$_3$ material decreases, and the percentage of active silicon thereof increases. Although the gram capacity of the SiC$_x$O$_y$@Al$_2$O$_3$ material increases, the structural stability thereof deteriorates, and the lithium-ion battery with the same capacity design has decreased cycling capacity retention rate and increased swelling rate.

Although some example embodiments of this application have been illustrated and described, this application is not limited to the disclosed embodiments. On the contrary, persons of ordinary skill in the art will recognize that some modifications and changes can be made to some embodiments without departing from the spirit and scope of this application described in the appended claims.

## Claims

1. A negative electrode active material, comprising carbon-silicon-oxygen particles and an aluminum oxide layer located on a surface of the carbon-silicon-oxygen particles, wherein the carbon-silicon-oxygen particles are represented by SiC$_x$O$_y$, 0<x<0.04, and 0.8<y<1.2.

2. The negative electrode active material according to claim 1, wherein 0.01≤x≤0.035, and 0.85≤y≤1.0.

3. The negative electrode active material according to claim 1, wherein thickness of the aluminum oxide layer is 0.5 nm to 10 nm.

4. The negative electrode active material according to claim 1, wherein the negative electrode active material satisfies at least one of the following conditions (a) to (c):

   (a) based on mass of the negative electrode active material, a percentage of element silicon is a%, wherein 45≤a≤70;
   (b) based on mass of the negative electrode active material, a percentage of element carbon is b%, wherein 0.9≤b≤11; or
   (c) based on mass of the negative electrode active material, a percentage of element aluminum is c%, wherein 0.04≤c≤1.0.

5. The negative electrode active material according to claim 1, wherein based on mass of the negative electrode active material, a percentage of element silicon is a%, and a percentage of element aluminum is c%, wherein

$0.001 \leq c/a \leq 0.015$; and/or a percentage of element carbon is b%, and a percentage of element aluminum is c%, wherein $0.008 \leq c/b \leq 0.30$.

6. The negative electrode active material according to claim 1, wherein the negative electrode active material satisfies at least one of the following conditions (d) to (h):

   (d) $D_v50$ of the carbon-silicon-oxygen particles ranges from 2.5 $\mu$m to 10 $\mu$m;
   (e) particle size distribution of the carbon-silicon-oxygen particles satisfies $0.3 \leq D_n10/D_v50 \leq 0.6$;
   (f) in an X-ray diffraction pattern of the carbon-silicon-oxygen particles, a highest intensity value at $2\theta$ of 28.0° to 29.0° is I2, and a highest intensity value at $2\theta$ of 20.5° to 21.5° is I1, wherein $0 < I2/I1 \leq 1$;
   (g) specific surface area of the carbon-silicon-oxygen particles is 1 $m^2/g$ to 50 $m^2/g$; or
   (h) powder conductivity of the negative electrode active material is 2.0 S/cm to 30 S/cm.

7. The negative electrode active material according to claim 1, wherein a method for preparing the negative electrode active material comprises: making a carbon-silicon-oxygen material and an aluminum source undergo a deposition reaction to obtain a reaction product; and roasting the reaction product, wherein a roasting temperature is 300°C to 800°C and/or a roasting time is 1 h to 5 h.

8. An electrochemical apparatus, comprising a negative electrode, wherein the negative electrode comprises the negative electrode active material according to any one of claims 1 to 7.

9. The electrochemical apparatus according to claim 8, wherein sheet resistance of the negative electrode is 0.2 S2 to 1 S2.

10. An electronic apparatus, comprising the electrochemical apparatus according to claim 8 or 9.

FIG. 1

FIG. 2

FIG. 3

FIG. 4

## INTERNATIONAL SEARCH REPORT

| | International application No. |
|---|---|
| | **PCT/CN2021/127966** |

**A. CLASSIFICATION OF SUBJECT MATTER**

H01M 4/48(2010.01)i; H01M 4/62(2006.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, CNABS, VEN, WOTXT, USTXT, EPTXT, CNKI: 硅, 碳, 氧, 氧化铝, 沉积, SiCxOy, silicon, Si, carbon, C, oxygen, O, alumina, Al2O3, deposition

**C. DOCUMENTS CONSIDERED TO BE RELEVANT**

| Category* | Citation of document, with indication, where appropriate, of the relevant passages | Relevant to claim No. |
|---|---|---|
| E | CN 114080701 A (NINGDE AMPEREX TECHNOLOGY LTD.) 22 February 2022 (2022-02-22) <br> description, paragraphs 5-175, and figures 1-2 | 1-6, 8, 10 |
| X | KR 20210096289 A (NINGDE AMPEREX TECHNOLOGY LTD.) 04 August 2021 (2021-08-04) <br> description, paragraphs 5-163, and figures 1-2 | 1-10 |
| Y | CN 113258051 A (TIANMU ENERGY ANODE MATERIAL CO., LTD.) 13 August 2021 (2021-08-13) <br> description, paragraphs 4-91, and figures 1-3 | 1-10 |
| Y | CN 102122708 A (INSTITUTE OF PHYSICS, CHINESE ACADEMY OF SCIENCES) 13 July 2011 (2011-07-13) <br> description, paragraphs 9-267, and figures 1-6 | 1-10 |
| Y | JP 2015133284 A (SHIN-ETSU CHEMICAL CO., LTD.) 23 July 2015 (2015-07-23) <br> description, paragraphs [0002]-[0053], and figures 1-6 | 1-10 |
| Y | JP 2016048673 A (MITSUBISHI CHEMICAL CORP.) 07 April 2016 (2016-04-07) <br> description, paragraphs 2 and 155-216 | 1-10 |

☑ Further documents are listed in the continuation of Box C.    ☑ See patent family annex.

| | |
|---|---|
| \* Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **01 July 2022** | **19 July 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| | International application No. |
|---|---|
| | **PCT/CN2021/127966** |

**C.     DOCUMENTS CONSIDERED TO BE RELEVANT**

| Category* | Citation of document, with indication, where appropriate, of the relevant passages | Relevant to claim No. |
|---|---|---|
| Y | CN 108807855 A (WUHAN AITEMIKE SUPOER POWER NEW MATERIAL TECHNOLOGY CO., LTD. et al.) 13 November 2018 (2018-11-13) description, paragraphs 3-25 | 1-10 |

Form PCT/ISA/210 (second sheet) (January 2015)

**INTERNATIONAL SEARCH REPORT**
Information on patent family members

International application No.

**PCT/CN2021/127966**

| Patent document cited in search report | | | Publication date (day/month/year) | Patent family member(s) | | | Publication date (day/month/year) |
|---|---|---|---|---|---|---|---|
| CN | 114080701 | A | 22 February 2022 | KR | 20210096289 | A | 04 August 2021 |
| KR | 20210096289 | A | 04 August 2021 | CN | 114080701 | A | 22 February 2022 |
| CN | 113258051 | A | 13 August 2021 | None | | | |
| CN | 102122708 | A | 13 July 2011 | None | | | |
| JP | 2015133284 | A | 23 July 2015 | JP | 6079651 | B2 | 15 February 2017 |
| JP | 2016048673 | A | 07 April 2016 | None | | | |
| CN | 108807855 | A | 13 November 2018 | None | | | |

Form PCT/ISA/210 (patent family annex) (January 2015)